# FASCICULE DE BREVET EUROPEEN

(11) **EP 1 280 689 B1**
(45) Date de publication et mention de la délivrance du brevet: **03.12.2003**
(21) Numéro de dépôt: 01934078.5
(22) Date de dépôt: 10.05.2001
(51) Int. Cl.: B61D 17/00

(54) **PROCEDE D'ELABORATION D'UNE STRUCTURE EN MATERIAU COMPOSITE, NOTAMMENT POUR VEHICULES FERROVIAIRES**
VERFAHREN ZUR HERSTELLUNG EINER STRUKTUR AUS FASERVERBUNDWERKSTOFF, INSBESONDERE FÜR SCHIENENFAHRZEUGE
METHOD FOR PRODUCING A STRUCTURE MADE OF COMPOSITE MATERIAL FOR RAILWAY VEHICLES

(30) Priorité: 12.05.2000 FR 0006089
(43) Date de publication de la demande: 05.02.2003
(73) Titulaire: CONSTRUCTIONS INDUSTRIELLES DE LA MEDITERRANEE- CNIM, F-75008 Paris (FR)
(72) Inventeur: PONSOT, Bernard, F-83500 La Seyne sur Mer (FR)
(74) Mandataire: Armengaud Ainé, Alain
(86) Numéro de dépôt international: FR0101413
(87) Numéro de publication internationale: WO01085517

(56) Documents cités:
- EP-A- 0 554 539
- EP-A- 0 687 611
- DE-A- 2 308 226
- DE-A- 3 841 597

## Description

La présente invention est relative à un procédé d'élaboration d'une structure en matériau composite notamment pour véhicules ferroviaires.

Selon un autre aspect de l'invention, elle a pour objet un dispositif mettant en oeuvre ce procédé d'élaboration.

Les structures ferroviaires sont classiquement réalisées en construction de type métallique, c'est à dire principalement à partir d'acier et ou d'aluminium. Ce type de construction présente l'inconvénient de conduire à une structure de masse importante.

Par ailleurs, on connaît également des procédés de construction de telles réalisations en matériau composite par assemblage de panneaux préfabriqués afin de former des structures de type caisse (par exemple, on dispose un panneau pour le plancher, deux panneaux latéraux et un panneau pour le pavillon).

Ainsi, EP-A-0 554 539 fait connaître un procédé pour la fabrication de caisses monocoques de véhicules à structure légère autoporteuse comportant la réalisation d'une couche de renforcement intérieure sur un noyau d'enroulement de façonnage présentant les dimensions de la caisse du véhicule à fabriquer. Le procédé comprend les caractéristiques du préambule de la Revendication 1.

Cette technique connue permet de réaliser des structures qui ont pour avantage d'être plus légères que celles réalisées en acier ou en aluminium, mais elle présente l'inconvénient de ne pas permettre de réaliser des renforcements longitudinaux. En outre, il est nécessaire d'effectuer des liaisons entre les panneaux (plancher, plafond) qui constituent des zones d'affaiblissement nécessitant des renforts locaux pénalisants en terme de masse.

De plus, le coût de fabrication de telles structures demeure élevé puisque ces techniques nécessitent un grand nombre d'interventions manuelles sans possibilité de mécanisation du procédé et le coût de transformation des matériaux de base (préimprégnés) est également important.

La présente invention vise donc à pallier de tels inconvénients en proposant un procédé d'élaboration d'une structure notamment ferroviaire par enroulement filamentaire de matériaux non transformés du type résine et fibres donc d'un coût minimisé, et qui permet d'obtenir une structure monobloc tout en garantissant une productivité élevée et en limitant ainsi les opérations de contrôle (et par conséquent les coûts associés). Le procédé objet de l'invention est également conçu de façon à permettre le dépôt de tissus longitudinaux assurant l'obtention d'une grande rigidité en mode poutre, qui est nécessaire pour des applications ferroviaires ou pour la réalisation de grandes structures similaires.

A cet effet, l'invention vise en premier lieu un procédé d'élaboration d'une structure en matériau composite notamment pour véhicules ferroviaires, selon le préambule de la Revendication 1, caractérisé en ce que le squelette est réalisé en deux demi-ossatures.

L'invention vise en second lieu un dispositif de fabrication d'une telle structure mettant en oeuvre le procédé tel que défini ci-dessus.

D'autres caractéristiques et avantages de la présente invention ressortiront de la description faite ci-après, en référence aux dessins annexés qui en illustrent un exemple de réalisation dépourvu de tout caractère limitatif. Sur les figures :
- la figure 1 est une vue schématique et de dessus du dispositif d'élaboration de la structure en matériau composite selon l'invention ;
- la figure 2 est une vue partielle et en perspective du dispositif de dépose de tissu selon l'invention ;
- la figure 3 est une vue en coupe longitudinale du procédé d'imprégnation de la machine de la figure 1 selon une première variante ;
- la figure 4 est une vue en coupe longitudinale du procédé d'imprégnation de la machine de la figure 1 selon une seconde variante ;
- les figures 5 à 13 sont des vues schématiques des différentes étapes du procédé d'élaboration selon l'invention ;
- la figure 14 est vue en coupe transversale de la structure en matériau composite obtenue par le procédé selon l'invention.

Le procédé d'élaboration d'une structure en matériau composite notamment pour véhicules ferroviaires selon l'invention comporte essentiellement huit étapes.

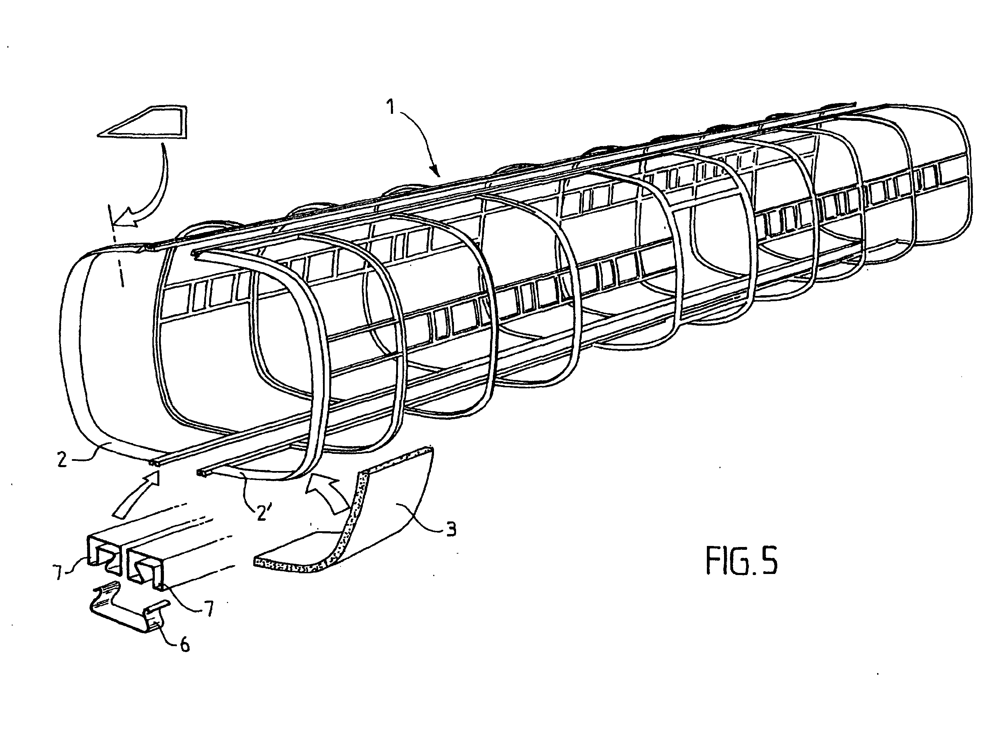

Une première étape (cf. figure 5) consiste à réaliser un squelette 1 constitué de préférence de deux demi-ossatures 2 et 2' (par exemple, métalliques). Ce squelette permet ainsi d'assurer la tenue locale de la structure finale et d'effectuer la mise en place et la maintien de baies ou de pièces métalliques de connexion avec, par exemple, les portes d'un véhicule ferroviaire.

La deuxième étape (cf . figure 5) a pour objet de fixer (par collage, par exemple) des panneaux 3 en mousse alvéolaire ou analogue entre des montants du squelette 1 obtenu à l'issu de la première étape. Ces panneaux de mousse assurent notamment l'inertie et le confort d'isolation de la structure du véhicule tout en limitant sa masse.

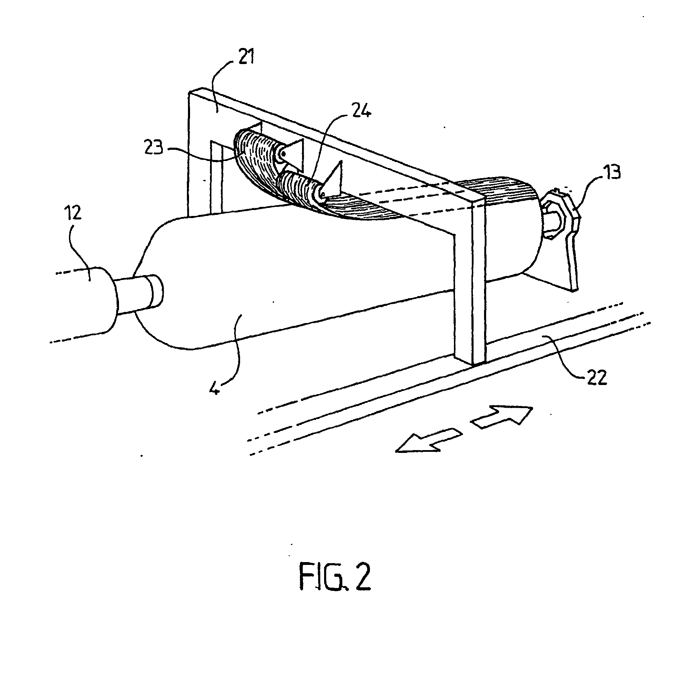

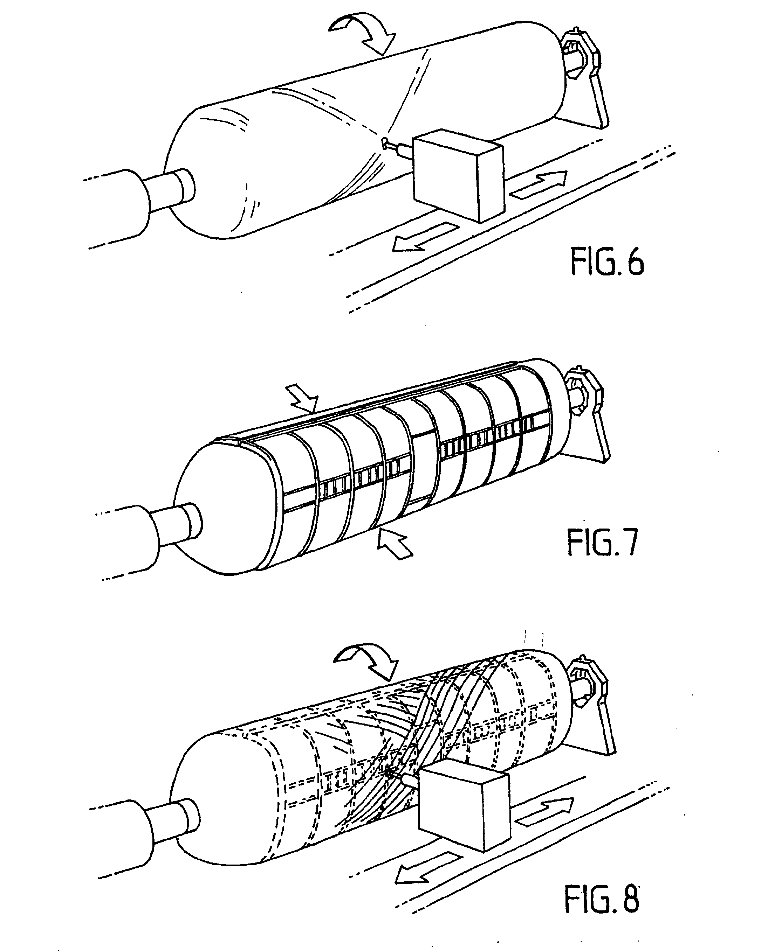

La troisième étape (cf . figures 6 et 2) du procédé consiste à effectuer un enroulement filamentaire de fibres et de résine sur un mandrin 4 sensiblement cylindrique et de gabarit adapté audit squelette ainsi qu'un renforcement longitudinal de cette structure par une dépose de tissu afin de réaliser une première peau 5 recouvrant ledit mandrin.

La quatrième étape (cf. figure 7) consiste à mettre en place et à positionner le squelette 1 c'est à dire les deux demi-ossatures 2 et 2' sur ladite première peau 5 du mandrin 4. Pour ce faire, l'assemblage des demi-ossatures s'effectue par exemple à l'aide d'attaches métalliques 6 venant s'insérer dans des rails 7 longitudinaux extrudés de ces demi-ossatures.

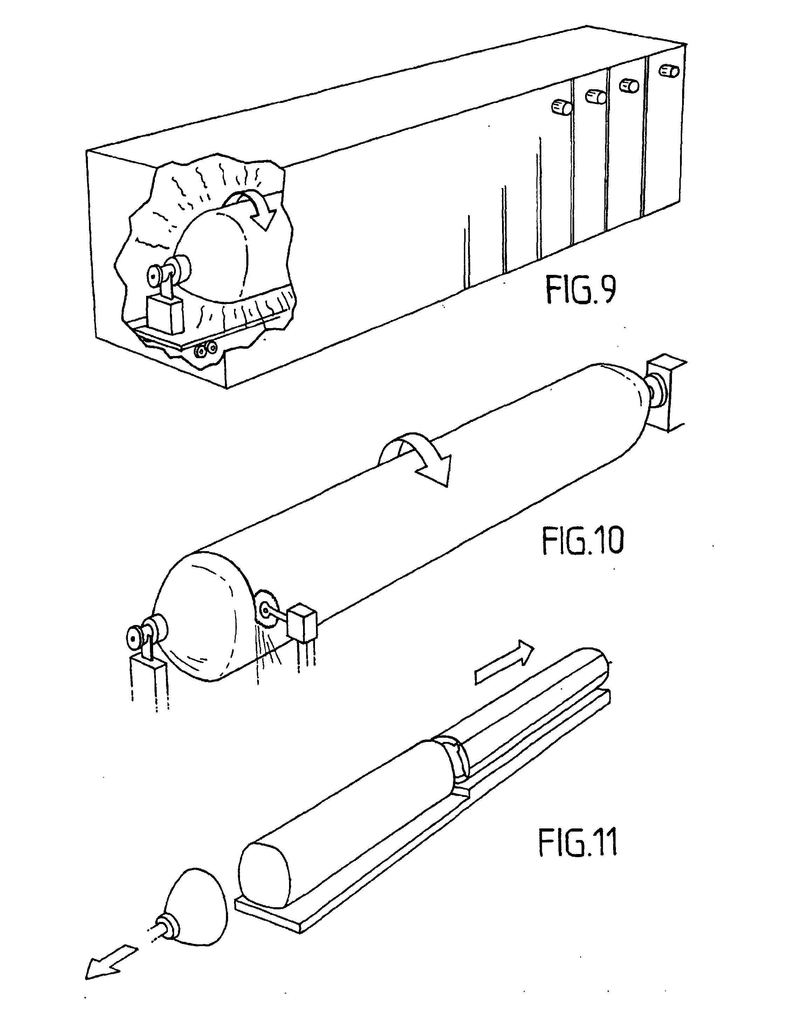

Dans une cinquième étape (cf. figures 8 et 2), on réalise une deuxième peau 8 recouvrant la structure obtenue par un enroulement filamentaire de fibres et de résine et un renforcement longitudinal de tissu sur les panneaux 3 du squelette 1 positionné sur le mandrin 4.

La sixième étape (cf. figure 9) du procédé consiste à effectuer une polymérisation en étuve de la structure obtenue à l'issu de la cinquième étape. Les conditions de cette polymérisation dépendent de nombreux facteurs (type de résine utilisée, dimensions et masse du squelette 1, performances de l'étuve elle-même, ...). A titre d'exemple, dans le cas de l'application de ce procédé à l'élaboration d'une voiture de T.G.V. (marque déposée), la température varie entre 120 et 140°C environ et la durée de polymérisation est comprise entre 24 et 48 heures environ.

La septième étape (cf. figure 10) consiste à tronçonner les extrémités de la structure réalisée à l'aide d'une scie circulaire ou analogue.

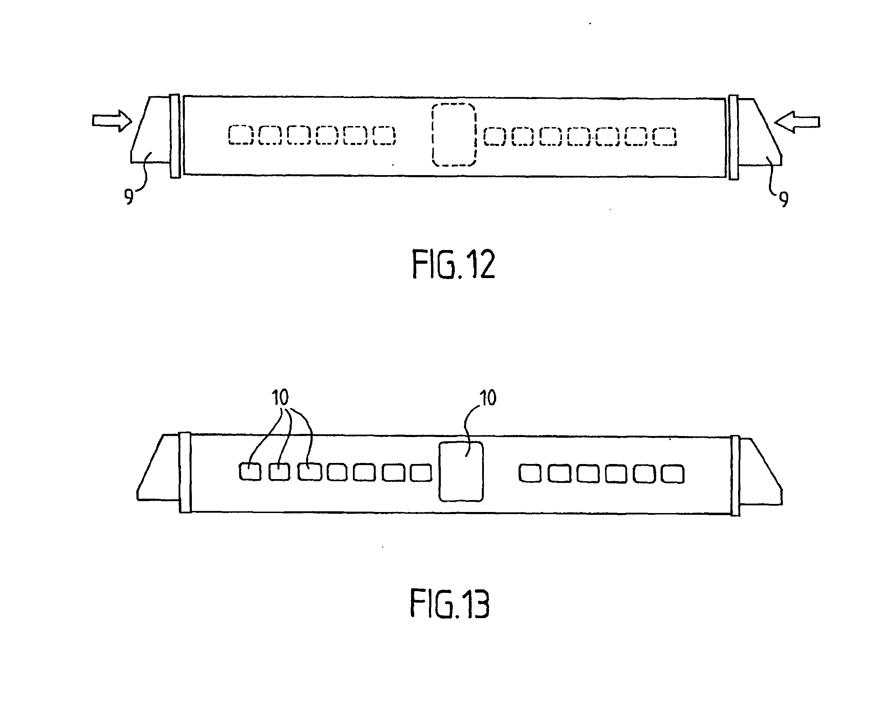

Enfin, la huitième étape (cf. figure 11) du procédé selon l'invention a pour but d'effectuer le démandrinage de la structure obtenue, c'est à dire de retirer le mandrin 4 qui a servi de support à la construction de cette structure.

Selon une caractéristique avantageuse de l'invention, le procédé peut comporter une neuvième étape (cf. figure 12) qui a pour objet de fixer des éléments 9 (par collage ou par liaisons mécaniques) à chaque extrémité de la structure de manière à effectuer un raccord avec d'autres structures similaires (dans le cas d'une application à l'élaboration d'une structure ferroviaire, ces éléments permettent le raccord avec d'autres voitures de train). En outre, on peut également effectuer le détourage d'ouvertures 10 du type fenêtres, portes ou similaires (cf. figure 13).

On décrira maintenant deux variantes du procédé d'imprégnation des tissus à déposer longitudinalement sur le mandrin (cf. troisième et cinquième étapes).

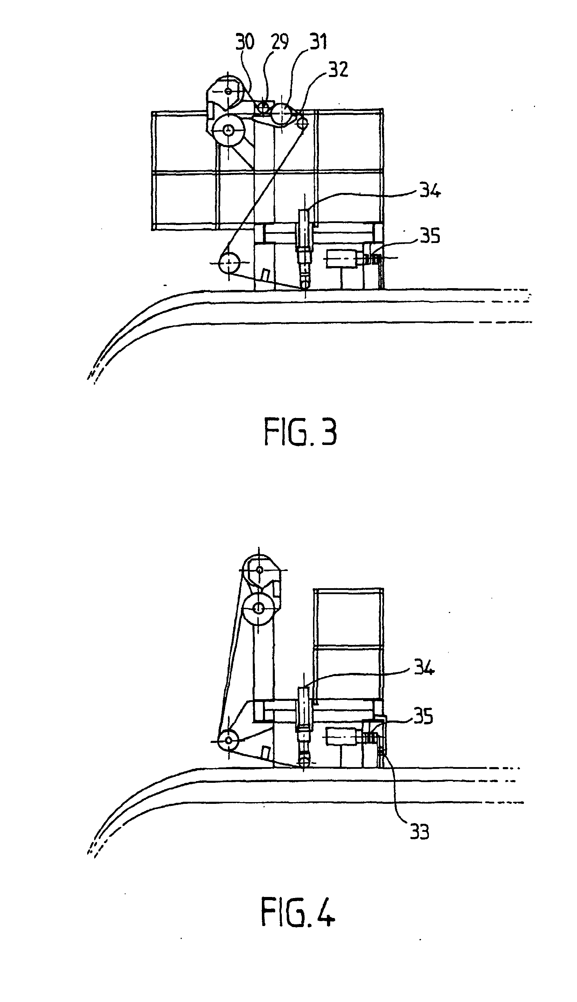

Une première variante consiste en un procédé d'imprégnation par enduction des tissus. Ce dispositif a pour objet d'apporter de la résine 29 sur une nappe 30 de fibres sèches soit en faisant cheminer la nappe dans un bain de résine liquide soit, comme représenté par la figure 3, en faisant passer ladite nappe de fibres sèches sur un rouleau 31 enduit de résine 29 par trempage de ce dernier dans un bac 32 d'imprégnation de résine.

En ce qui concerne la deuxième variante, celle-ci consiste en un procédé d'imprégnation par projection des tissus (cf. figure 4). Celui-ci a pour objet d'apporter la résine 29 sur la nappe 30 de fils secs par projection ou par pulvérisation à l'aide de buses 33 directement lors de la dépose sur le mandrin 4.

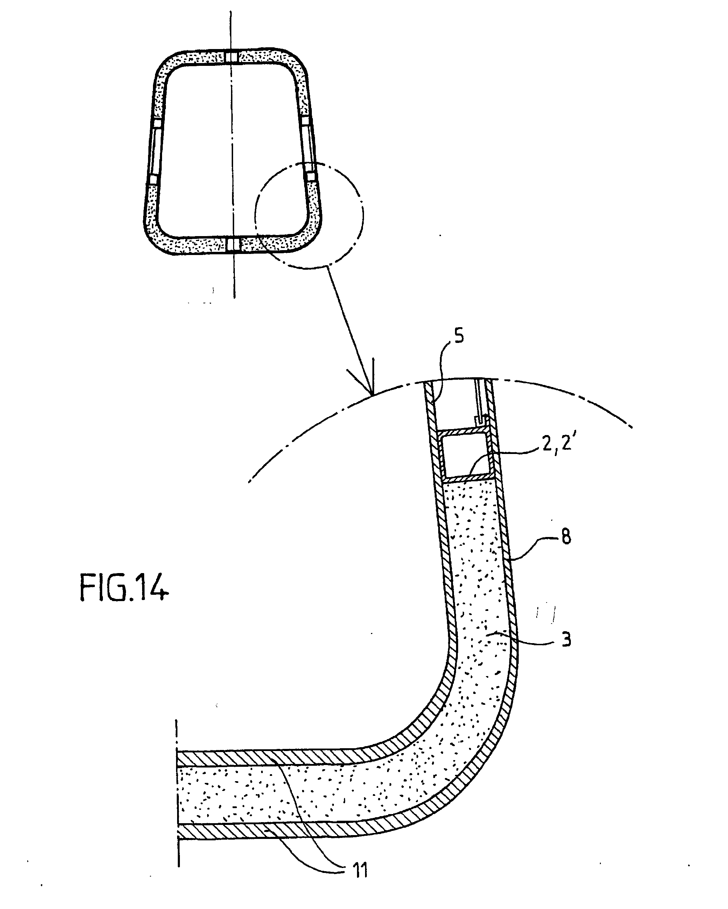

Un tel procédé d'élaboration permet d'obtenir une structure en matériau composite telle que représentée en coupe transversale sur la figure 14 pour une application avantageuse du procédé à l'élaboration d'un véhicule ferroviaire. Sur ce dessin, on voit que cette structure comporte une première peau intérieure 5 et une deuxième peau extérieure 8. Ces deux peaux sont constituées par des couches successives de fibres et de résine sur la circonférence et sont renforcées par plusieurs couches de tissu et de résine disposées longitudinalement afin d'améliorer les caractéristiques mécaniques de l'ensemble.

On remarquera également que l'épaisseur des fibres et de la résine déposées est plus importante sur les faces inférieures 11 de la structure de manière à renforcer la résistance mécanique de la structure au niveau de la zone destinée à supporter les personnes et/ou marchandises transportées. La structure comprend en outre le squelette 1 de préférence métallique constitué de deux demi-ossatures 2 et 2' comportant elles-mêmes des panneaux de mousse 3 entre ces montants.

On décrira maintenant le dispositif mettant en oeuvre le procédé d'élaboration d'une structure en matériau composite notamment pour véhicule ferroviaire selon l'invention.

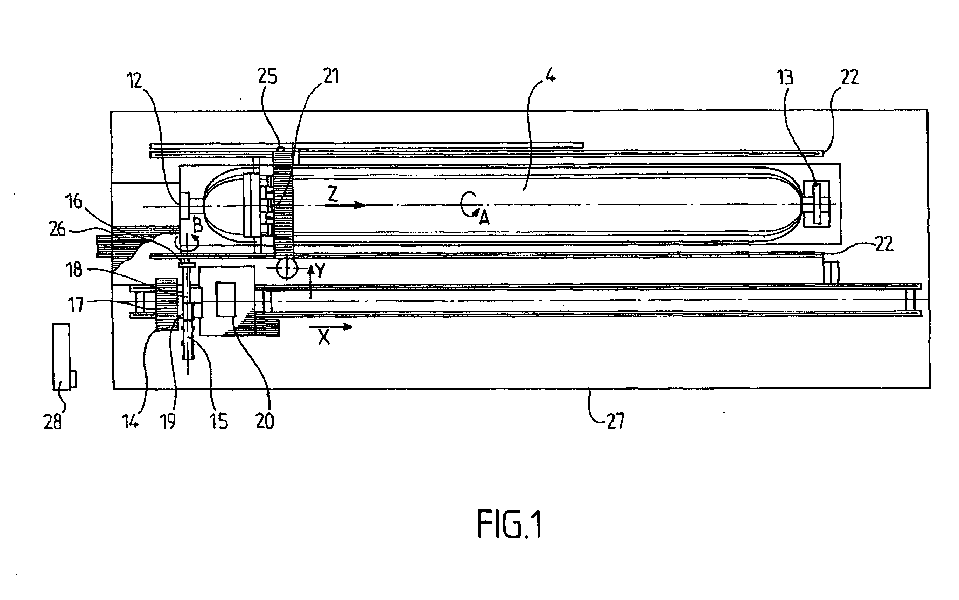

Si on se réfère à la figure 1, on voit que la machine de fabrication d'une telle structure comporte notamment un mandrin 4 sensiblement cylindrique soutenu et entraîné en rotation autour d'un axe A par une poupée fixe 12, une lunette 13 étant prévue pour le guidage et le maintien dudit mandrin en rotation. Un chariot 14 disposé sur un banc peut se déplacer longitudinalement (axe X) sur toute la longueur du mandrin 4. Sur ce chariot, on installe un bras de dépose 15 perpendiculairement à l'axe X de déplacement dudit chariot sur lequel est fixée une tête 16 de dépose de fibres et de résine elle-même munie d'un mouvement de rotation autour dudit bras de dépose (axe B), ce dernier pouvant se déplacer transversalement selon un axe Y.

Par ailleurs, une passerelle 17 fixée au chariot 14 permet d'accéder à un pupitre 18 de commande du dispositif d'imprégnation 19 installé sur le bras de dépose 15. Ce dispositif d'imprégnation permettant l'enroulement filamentaire sur le mandrin 4 en rotation fonctionne de préférence par enduction (apport de résine sur une nappe de fibres sèches), et est alimenté par des bobines de fils disposées sur un cantre 20 mécaniquement relié au chariot 14.

Comme représenté par la figure 2, la machine comporte également un dispositif de dépose de tissus dans une direction parallèle à l'axe longitudinal du mandrin, de leur imprégnation en résine et de leur maintien sur ledit mandrin. Pour ce faire, ce dispositif comprend un portique 21 positionné perpendiculairement à l'axe longitudinal dudit mandrin et pouvant se déplacer longitudinalement sur des rails 22 disposés de part et d'autre du mandrin 4 selon un axe Z.

Afin de pouvoir utiliser des largeurs standards de tissu, le dispositif de dépose de celui-ci comporte deux rouleaux 23 et 24 positionnés de part et d'autre d'une génératrice du mandrin 4. En fin de dépose, le tissu est découpé automatiquement par un disque se déplaçant transversalement. On prévoit également une passerelle 25 d'accès au portique 21 afin de pouvoir effectuer une inspection de la dépose ainsi que le chargement des rouleaux de tissus.

Enfin, la machine de fabrication de la structure en matériau composite comporte une passerelle de visite 26 située entre le mandrin 4 et le chariot 14 qui permet à un opérateur d'accéder à ladite machine afin d'effectuer des opérations de surveillance et d'intervention. Dé plus, des barrières de protection 27 avec des portes de sécurité (non représentées) interdisent l'accès pendant le fonctionnement de la machine, et une armoire électrique avec un pupitre principal 28 permet de piloter la machine, notamment par commande numérique.

Cette machine est donc équipée de cinq axes de mouvement qui permettent une dépose des fibres sur toute la surface du mandrin afin d'obtenir un recouvrement homogène et uniforme de ce dernier. Une commande numérique peut également gérer la coordination des différents mouvements de translation et de rotation effectués par les éléments de la machine et dont les axes sont les suivants :
- l'axe A de rotation du mandrin 4,
- l'axe B de rotation de la tête de dépose 16,
- l'axe X de translation longitudinale du chariot 14,
- l'axe Y de plongée du bras de dépose 15, et
- l'axe Z de translation longitudinale du portique 21 de drapage.

Les axes X et Y sont de préférence respectivement parallèle et perpendiculaire à l'axe A.

Selon une autre caractéristique avantageuse de l'invention, le dispositif de dépose des tissus comporte également des moyens empêchant la formation de plis sur le tissu déposé. Ces moyens sont constitués par au moins une ligne 34 de rouleaux en contact avec la surface du mandrin.

Selon encore une autre caractéristique avantageuse de l'invention, un chariot de tourillonnage 35 porteur d'une bobine régulée en tension circule sur un rail de guidage attaché au portique 21 de manière à déposer un fil de maintien simultanément à la dépose du tissu. La dépose de ce fil a pour avantage de maintenir le tissu en position longitudinale et de contenir sa gravité pendant l'opération d'enroulement suivante. En fin de dépose, ce fil peut être coupé et ligaturé manuellement.

La présente invention telle que décrite précédemment offre de multiples avantages :
- l'opération consistant à préfabriquer le squelette en l'équipant de tous les panneaux cadres, permet d'aboutir à un procédé très économique étant donné que le temps d'occupation des machines est réduit au minimum ;
- il est également possible de déposer des tissus longitudinaux, ce qui permet d'obtenir une grande rigidité en mode poutre, ainsi qu'on l'a déjà mentionné ci-dessus ;
- il est possible d'obtenir une structure en matériau composite possédant des propriétés mécaniques améliorées associées à une masse limitée, un grand confort dynamique et acoustique, des propriétés d'isolation et un coût limité par l'utilisation de matériaux économiques (fibres et résine) tout en évitant les problèmes de corrosion.

Il demeure bien entendu que la présente invention n'est pas limitée aux exemples de réalisation décrits et représentés ci-dessus, mais qu'elle en englobe toutes les variantes. En particulier, le procédé selon l'invention peut être appliqué à tout type de structure de révolution et de dimensions importantes qui nécessitent l'utilisation de matériaux composites, notamment pour les véhicules ferroviaires, les fuselages d'avion ou les structures aéronautiques et aérospatiales en général.

Par ailleurs, les seconds moyens (19) permettant de réaliser un enroulement filamentaire sur le mandrin (4) sont aptes à se déplacer à la fois parallèlement et perpendiculairement audit axe de révolution dudit mandrin respectivement selon un second (X) et un troisième (Y) axes et peuvent être mis en rotation autour dudit troisième axe (Y) .

## Revendications

1. Procédé d'élaboration d'une structure en matériau composite notamment pour véhicules ferroviaires, consistant à :
- réaliser un squelette (1) ,
- fixer des panneaux (3) en mousse alvéolaire ou analogue entre des montants dudit squelette,
- effectuer un enroulement filamentaire de fibres et de résine sur un mandrin (4) de gabarit adapté audit squelette ainsi qu'un renforcement longitudinal par une dépose de tissu afin de réaliser une première peau (5) recouvrant ledit mandrin,
- positionner le squelette (1) sur ladite première peau du mandrin (4),
- réaliser une deuxième peau (8) recouvrant la structure obtenue par enroulement filamentaire de fibres et de résine et dépose longitudinale de tissu sur les panneaux (3) dudit squelette,
- effectuer une polymérisation en étuve,
- tronçonner les extrémités de la structure,
- et réaliser le retrait dudit mandrin,
**caractérisé en ce que** le squelette (1) est réalisé en deux demi-ossatures

2. Procédé selon la revendication 1, **caractérisé en ce que**, après avoir réalisé ledit retrait dudit mandrin, on fixe des éléments (9) à chaque extrémité de la structure de manière à effectuer un raccord avec d'autres structures similaires et on effectue un détourage d'ouvertures (10) du type fenêtres, portes ou similaires.

3. Procédé selon l'une des revendications 1 ou 2, **caractérisé en ce que** ladite dépose de tissu est réalisée par enduction d'une résine sur ledit tissu.

4. Procédé selon l'une des revendications 1 ou 2, **caractérisé en ce que** ladite dépose de tissu est réalisée par projection d'une résine sur ledit tissu.

5. Dispositif de mise en oeuvre du procédé selon l'une quelconque des revendications précédentes, **caractérisé en ce qu'**il comprend :
- des premiers moyens (12) permettant la mise en rotation d'un mandrin (4) sensiblement cylindrique autour de son axe (A) de révolution ;
- des seconds moyens (19) permettant de réaliser un enroulement filamentaire sur ledit mandrin,
- des troisièmes moyens (21) permettant d'assurer une dépose longitudinale de tissu sur ledit mandrin, afin de réaliser ladite peau (5) ;
- des moyens pour mettre en place et positionner les deux ossatures (2, 2') dudit squelette (1), sur ladite peau (5) du mandrin ;
- des moyens pour réaliser une deuxième peau (8) sur la structure ainsi obtenue ;
- une étuve pour effectuer la polymérisation de ladite structure et
- des moyens pour tronçonner les extrémités de la structure avant l'extraction du mandrin (4).

6. Dispositif selon la revendication 5, **caractérisé en ce que** lesdits seconds moyens sont aptes à se déplacer à la fois parallèlement et perpendiculairement audit axe de révolution dudit mandrin respectivement selon un second (X) et un troisième (Y) axes et peuvent être mis en rotation autour dudit troisième axe (Y).

7. Dispositif selon l'une des revendications 5 ou 6, **caractérisé en ce que** lesdits troisièmes moyens peuvent se déplacer dans une direction parallèle audit axe de révolution dudit mandrin.

8. Dispositif selon l'une quelconque des revendications 5 à 7, **caractérisé en ce que** lesdits troisièmes moyens comportent au moins une ligne de rouleaux en contact avec la surface dudit mandrin afin d'empêcher la formation de plis sur le tissu déposé.

9. Dispositif selon l'une quelconque des revendications 5 à 8, **caractérisé en ce qu'**il comporte des quatrièmes moyens permettant de déposer un fil de maintien simultanément à ladite dépose de tissu.

10. Dispositif selon la revendication 9, **caractérisé en ce que** lesdits quatrièmes moyens comportent un chariot porteur d'une bobine régulée en tension circulant sur un rail de guidage attaché aux troisièmes moyens.

## Patentansprüche

1. Verfahren zur Herstellung einer Struktur aus Verbundwerkstoff, insbesondere für Schienenfahrzeuge, das darin besteht:
- ein Gerüst (1) herzustellen, ,
- Platten (3) aus einem Wabenschaum oder entsprechendem Material zwischen den Trägern des besagten Gerüsts zu befestigen,
- einen fadenweisen Wickelvorgang von Fasern und Harz auf einem Kern (4) mit an das besagte Gerüst angepassten Abmessungen sowie eine Längsverstärkung durch ein Auflegen von Gewebe durchzuführen, um eine erste, den besagten Kern bedeckende Schale (5) zu erzeugen,
- das Gerüst (1) auf besagte erste Schale des Kerns aufzulegen,
- eine zweite, die erhaltene Struktur bedeckende Schale (8) durch fadenweises Wickeln von Fasern und Harz und Längsablegen von Gewebe auf den Platten (3) des besagten Gerüstes zu erzeugen,
- eine Trockenofen-Polymerisation durchzuführen,
- die Enden der Struktur abzutrennen
- und den besagten Kern herauszuziehen,
**dadurch gekennzeichnet, dass** das Gerüst (1) aus zwei Halb-Tragwerken hergestellt ist.

2. Verfahren nach Anspruch 1, **dadurch gekennzeichnet, dass** nach dem Herausziehen des besagten Kerns an jedem Ende der Struktur Elemente (9) derart befestigt werden, damit eine Verbindung mit anderen ähnlichen Strukturen herstellbar wird, und dass Öffnungen in der Art von Fenstern, Türen oder ähnlichem ausgeschnitten werden.

3. Verfahren nach Anspruch 1 oder 2, **dadurch gekennzeichnet, dass** besagtes Gewebeablegen durch Auftragen eines Harzes auf das besagte Gewebe durchgeführt wird.

4. Verfahren nach Anspruch 1 oder 2, **dadurch gekennzeichnet, dass** besagtes Gewebeablegen durch Aufspritzen eines Harzes auf das besagte Gewebe durchgeführt wird.

5. Vorrichtung zum Durchführen des Verfahrens nach einem der vorstehenden Ansprüche, **dadurch gekennzeichnet, dass** sie umfasst:
- erste Mittel (12) zum Drehen eines im Wesentlichen zylindrischen Kerns (4) um seine Drehachse (A);
- zweite Mittel (19) zum Umwickeln des besagten Kerns mit Fäden;
- dritte Mittel (21) zum Durchführen einer Gewebeablage in Längsrichtung auf dem besagten Kern, um die besagte Schale (5) herzustellen;
- Mittel zum Anlegen und Positionieren der beiden Tragwerke (2, 2') des besagten Gerüsts (1) auf besagter Schale (5) des Kerns;
- Mittel zum Herstellen einer zweiten Schale (8 ) auf der so erhaltenen Struktur;
- einen Trockenofen zum Bewirken der Polymerisation der besagten Struktur und
- Mittel zum Abtrennen der Enden der Struktur vor dem Herausziehen des Kerns (4).

6. Vorrichtung nach Anspruch 5, **dadurch gekennzeichnet, dass** besagte zweite Mittel zugleich parallel und senkrecht zur besagten Drehachse des Kerns jeweils entlang einer zweiten Achse (X) und einer dritten Achse (Y) verschiebbar sind und in Rotation um besagte dritte Achse (Y) versetzt werden können.

7. Vorrichtung nach einem der Ansprüche 5 oder 6, **dadurch gekennzeichnet, dass** besagte dritte Mittel in einer Richtung parallel zur besagten Drehachse des Kerns verschiebbar sind.

8. Vorrichtung nach einem der Ansprüche 5 bis 7, **dadurch gekennzeichnet, dass** besagte dritte Mittel mindestens eine Reihe von Rollen umfassen, die mit der Oberfläche des besagten Kerns in Kontakt sind, um die Bildung von Falten auf dem abgelegten Gewebe zu verhindern.

9. Vorrichtung nach einem der Ansprüche 5 bis 7, **dadurch gekennzeichnet, dass** sie vierte Mittel zum Ablegen eines Haltefadens gleichzeitig mit dem Ablegen des Gewebes umfasst.

10. Vorrichtung nach Anspruch 9, **dadurch gekennzeichnet, dass** besagte vierte Mittel einen Tragwagen für eine spannungsgeregelte Spule umfassen, der auf einer an den dritten Mitteln angebrachten Führungsschiene verfahrbar ist.

## Claims

1. Method for producing a structure made of composite material in particular for railway vehicles, consisting of
- producing a framework (1) ,
- fixing panels (3) made of open cell foam or similar between posts of said framework,
- making a filament winding of fibres and resin on a mandrel template (4) adapted to said framework and a longitudinal reinforcement by depositing fabric to produce a first skin (5) covering said mandrel,
- positioning the framework (1) on said first skin of the mandrel (4),
- producing a second skin (8) covering the structure obtained by filament winding of fibres and resin and longitudinal depositing of fabric on the panels (3) of said framework,
- carrying out polymerisation in a drying oven.
- cutting the ends of the structure to length,
- and withdrawing said mandrel,
**characterised in that** the framework (1) is produced in two half frames.

2. Method according to claim 1, **characterised in that** after said mandrel has been withdrawn, elements (9) are fixed to each end of the structure to bring about a connection with other similar structures and openings (10) for the window, door or similar are cut out.

3. Method according to either of claims 1 or 2 **characterised in that** said depositing of fabric is carried out by applying a resin coating to said fabric.

4. Method according to either of claims 1 or 2, **characterised in that** said depositing of fabric is carried out by spraying a resin onto said fabric.

5. Device for carrying out the method according to any one of the preceding claims, **characterised in that** it comprises:
- first means (12) for rotating a substantially cylindrical mandrel (4) about its axis (A) of revolution;
- second means (19) for producing a filament winding on said mandrel,
- third means (21) for longitudinal depositing of fabric on said mandrel to produce said skin (5);
- means for placing and positioning two frames (2, 2') of said framework (1) on said skin (5) of the mandrel;
- means for producing a second skin (8) on the structure thus obtained;
- a drying oven for carrying out the polymerisation of said structure and
- means for cutting the ends of the structure to length before extraction of the mandrel (4).

6. Device according to claim 5, **characterised in that** said second means are capable of moving both in parallel with and perpendicularly to said axis of revolution of said mandrel along a second (X) and a third (Y) axis respectively and can be rotated about said third axis (Y).

7. Device according to either of claims 5 or 6, **characterised in that** said third means may be moved in a direction parallel to said axis of revolution of said mandrel.

8. Device according to any one of claims 5 to 7, **characterised in that** said third means comprise at least one line of rollers in contact with the surface of said mandrel to prevent the formation of folds on the deposited fabric.

9. Device according to any one of claims 5 to 8, **characterised in that** it comprises fourth means for depositing a retaining thread simultaneously with said depositing of fabric.

10. Device according to claim 9, **characterised in that** said fourth means comprise a carriage for carrying a reel with regulated tension circulating on a guide rail attached to the third means.
